# EUROPEAN PATENT SPECIFICATION

(11) **EP 2 281 733 B1**
(45) Date of publication and mention of the grant of the patent: **06.01.2016**
(21) Application number: 09305735.4
(22) Date of filing: 05.08.2009
(51) Int. Cl.: B62D 25/20, B62D 33/06, B62D 49/00

(54) **Agricultural vehicle with a cabin having a double-walled floor arrangement**
Landwirtschaftliches Fahrzeug mit einer Kabine mit doppelwandiger Bodenanordnung
Véhicule agricole doté d'une cabine avec un agencement de plancher à double paroi

(43) Date of publication of application: 09.02.2011
(73) Proprietor: CLAAS Tractor S.A.S., 78141 Vélizy-Villacoublay Cedex (FR)
(72) Inventor: Carimantran, François, 78280 Guyancourt (FR); Guitton, Paul-Henry, 78370 Plaisir (FR); Hautefeuille, Nicolas, 78140 Vélizy (FR); Durepaire, Mathias, 78970 Méliziers sur Seine (FR); Römer, Jens, 34549 Edertal (DE); Tollemer, Samuel, 50360 Picauville (FR)
(74) Representative: Casalonga, Axel

(56) References cited:
- EP-A- 0 518 170
- EP-A- 1 609 701
- WO-A1-2010/049380
- FR-A- 2 662 404
- GB-A- 2 041 848
- US-A- 4 785 900

## Description

The invention relates to an agricultural vehicle such as a tractor, and more particularly to a double walled floor arrangement for a cabin of such an agricultural vehicle.

A tractor used in agriculture is commonly composed of a front and rear axle, a frame structure, a chassis and a cabin in which the driver controls every part of the tractor, and drives it. All the necessary electric, electronic, and hydraulic elements for operating the different operating means are usually located in a region near the cabin.

These many elements can be mounted under the cabin. In this configuration, they are unfortunately difficult to reach for any maintenance operation unless the cabin is removed which demands a considerable operation and specific heavy equipment.

These elements can also be installed inside the cabin. The accessibility is better, but the noise generated by the different elements is not tampered and can be very uncomfortable for the operator inside the cabin.

US 6 991 042 discloses a tractor hydraulic structure which is situated outside and below the tractor cabin. If any maintenance is required for the hydraulic valves, it is difficult to reach them. Indeed, either the cabin has to be removed either they have to be reached from underneath the cabin where a lot of other components obstruct the access.

Moreover, no insulation for noise reduction, such as housings, is considered in this document.

EP 0 429 085 discloses a specific noise reduced cabin structure for an agricultural vehicle. The noise reduction is realized by specific cabin frame structure, such as sound damping structure material or a rubber mounted cabin, and specific shaped cabin windows. Both measures are suitable to reduce the noise within the cabin but they do not eliminate the cause of cabin noise. They act against the effects of non covered hydraulic elements situated close to or inside the cabin.

It is known from document EP 1 609 701 a contruction machine having a cabin structure comprising a floor arrangement for supporting at least a seat, the floor arrangement comprising a double-walled structure defining a storage space and composed of a lower floor panel and an upper floor panel.

The present invention provides a solution to solve the different problems caused by the arrangement of the different equipments, improving the accessibility of the equipment for any maintenance operation and reducing the noise that can be generated by these equipments.

Thus, the invention proposes an agricultural vehicle such as a tractor having a main chassis onto which is fixed a cabin structure having a floor arrangement for supporting at least a seat.

According to a general feature of the agricultural vehicle, at least a part of said floor arrangement may comprise a double walled structure defining a storage space adapted to receive operating equipments of the vehicle.

Therefore, the operating means can be insulated in the storage space, reducing the noise inside the cabin.

The double walled structure is composed of a lower floor portion and an upper floor portion.

Preferably, the lower floor portion may be secured to the main chassis by suspension means.

Thus, the cabin may be fixed by a three or four point suspension, allowing an increased comfort to the operator inside the cabin.

The upper floor portion comprises at least one trap door for accessing the operating equipments.

The operating equipment may therefore be reached from inside the cabin by opening or removing the at least one trap door allowing an easier access to the operating equipments. The upper wall may be composed of removable trap doors arranged in such a way that a part or the entire upper floor portion can be opened or removed to access the operating equipments.

The upper floor portion comprises a first portion located at the front of the cabin structure and a second portion located at the back of the cabin structure, the second portion being at a higher altitude level than the first portion, the first and second portions defining a step.

Thus, the storage space under the first portion of the upper floor portion has a height smaller than the height of the storage space under the second portion of the upper floor portion.

The seat is mounted on the second portion of the upper floor part.

The higher part of the upper floor portion, which is the floor portion inside the cabin, is located at the back of the upper floor portion offering therefore an already higher position to install a seat for the operator.

Advantageously, the storage space defined by the upper and lower floor portions may be separated into at least two chambers by at least one separating means.

By separating the storage space into different chambers, it is possible to insulate operating equipments from other. Thus, it is possible to reduce the noise as each element can be installed in a confined environment. The upper floor portion includes a trap door over every chamber, it is possible to access a given element while keeping the other safely inside their chamber.

Preferably, the at least one separating means may be coupled to both the upper floor portion and the lower floor portion in order to help support the upper floor portion.

The separating means can be installed between the upper floor portion and the lower floor portion and fixed in different localisations reinforcing the rigidity of the upper floor portion on which the operator stands when inside the cabin.

The operating equipments may preferably be electrical equipments and/or hydraulic equipments.

One of the operating equipments may advantageously be a main module of an air conditioner system for the cabin.

Other advantages and characteristics of the invention will appear at the examination of the detailed description of a realization of the invention, being in no way limiting, and of the appended drawings on which:
- figure 1 illustrates schematically a tractor;
- figure 2 presents a cross sectional side view of the inside of a tractor cabin;
- figure 3 presents a view from above of the inside of the cabin with the upper floor portion;
- figure 4 present a view from above of the inside of the cabin without the upper floor portion.

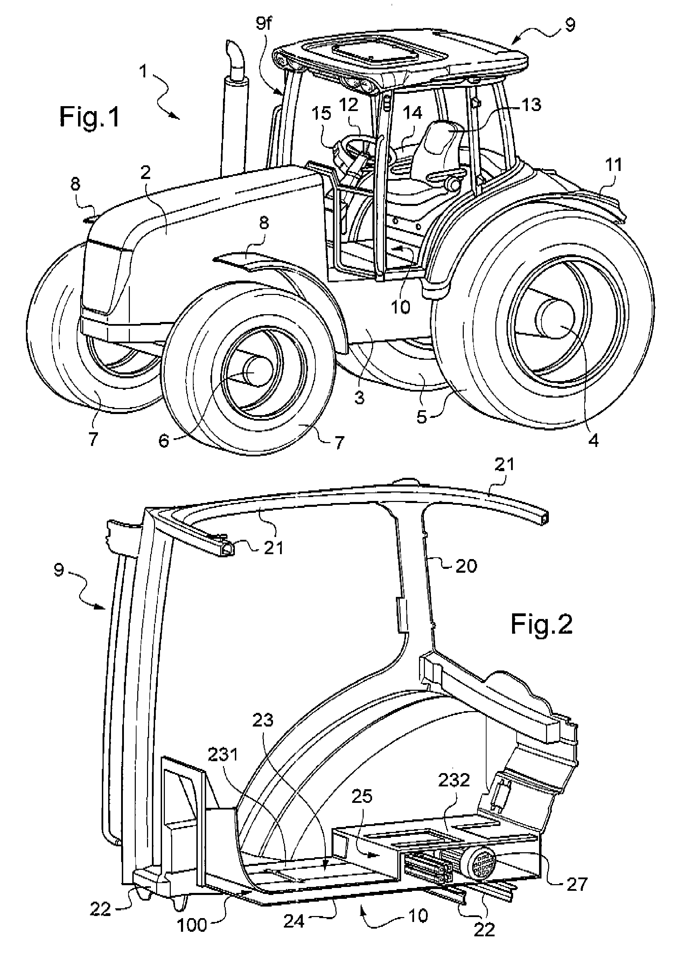

A tractor 1 is schematically illustrated on figure 1. It includes a bonnet 2 covering an engine mounted on a front portion of the tractor 1 and supported by a chassis 3. The chassis 3 is coupled at a rear portion of the tractor 1 to a rear axle 4 which supports two rear wheels 5 transversely opposed at each end of the rear axle 4. At a front portion of the tractor, the chassis 3 is coupled to a front axle 6 supporting two front wheels 7 transversely opposed at each end of the front axle 6. The chassis is also coupled on both sides to front mudguards 8 on a front portion directly above each front wheel 7.

Furthermore, the tractor 1 supports on a rear portion of its chassis 3 an operator's cabin 9. The cabin 9 is defined by a main framework 9f, a floor arrangement 10 coupled to the bottom of the main framework 9f, and rear mudguards 11 coupled on both sides of the cabin framework 9f and arranged so as to be positioned directly above each rear wheel 5. Within the cabin structure 5 are located a steering wheel 12, at least one seat 13, a control armrest 14 comprising an armrest area, a control panel, and a display panel 15.

The cabin 9 is secured to the tractor 1 and more particularly to the rear part of the chassis 3 via a three or four point suspension not illustrated on the drawings, so as to reduce the disturbances in the operator's cabin 9 while driving on unlevelled ground. Supply lines, such as electric wires or hydraulic conduits, also not illustrated on the drawings connect the cabin 9 to the rest of the tractor 1 without any load-bearing properties.

Figure 2 on which identical parts bear the same reference numerals illustrates a cross sectional side view of the inside of the cabin 9. On this figure the elements composing the inside of the cabin 9 have been removed so that the cabin structure can be clearly seen.

The cabin 9 is defined as in figure 1 by the framework 9f which is composed of a plurality of struts 20 coupled between a plurality of top frames 21 mounted on upper ends of the struts 20 and based frames 22 mounted on the bottom end of the struts 20.

The floor arrangement 10 is mounted on the based frames 22. The floor arrangement 10 comprises an upper floor portion 23 and a lower floor portion 24, composing together a double walled structure. The upper floor portion 23 and lower floor portion 24 define a storage space 100 adapted to receive operating equipments of the tractor 1.

The upper floor portion 23 comprises a first portion 231 located at the front of the cabin structure 9 and a second portion 232 located at the back of the cabin structure 9, thus dividing the upper floor portion 23 into two substantially equivalent surfaces. Different arrangements could of course be used in other arrangements depending on particular needs. The second portion 232 is located at a higher altitude level than the first portion 231 in such a way that the first and second portions define a step 25.

The storage space 100 between the upper floor portion 23 and the lower floor portion 24 can therefore receive more voluminous equipments than the storage space under the first portion 231. Different electrical and/or hydraulic operating equipments can be stored in this storage space 100 in a place depending on their volume and height. In a preferred embodiment, a heating venting air conditioning system 27 for the cabin, comprising a fan, control unit, an evaporator and a heat exchanger, can be stored in the storage space under the second portion 232 of the upper floor portion 23.

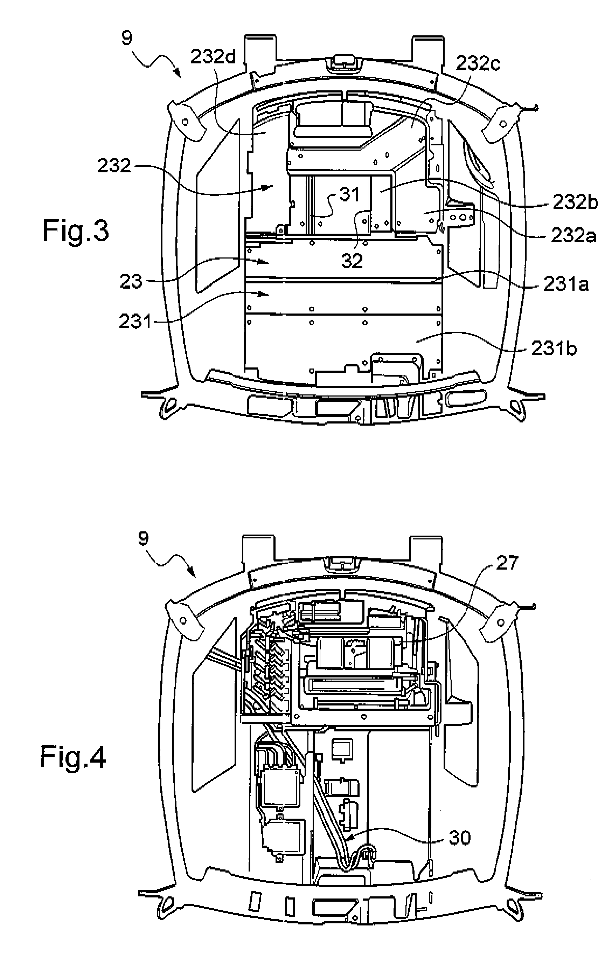

Figure 3 and 4 on which identical parts bear the same reference numerals illustrate two views from above of the inside of the cabin 9. The cabin 9 is provided with the upper floor portion 23 in figure 3. In figure 4, the upper floor portion 23 has been removed.

On figure 3, the first portion 231 of the upper floor portion 23 with a lower altitude than the second portion 232 of the upper floor portion 23 comprises two trap doors 231a and 231b. Both trap doors 231a and 231b can either be opened, the trap doors being fixed by hinges to the rest of the upper floor portion 23, or removable and secured for example by screws. As illustrated on figure 4, these trap doors 231a and 231b allow accessing to the operating equipments directly underneath them, such as electric wiring 30 and different electric equipments adapted to be stored in this area of the storage space 100.

In the embodiment illustrated on figure 3, the second portion 232 of the upper floor portion 23 comprises four trap doors 232a, 232b, 232c and 232d that can be opened if fixed with hinges for example to the rest of the upper floor portion 23, or removable and secured for example by screws. Trap doors 232a and 232d allows accessing to the operating equipment directly underneath them at the back of the cabin 9 on each side of the operator's seat 13 which is mounted on two rails 31 and 32 installed on the trap door 232b. As it is illustrated on figure 4, the trap door 232c, which is behind trap door 232b supporting the seat 13, allows accessing the components of the heating venting air conditioning system 27 for service or repair.

The storage space 100 can also include, for example, an air conducting system comprising as independent pipes or pipes integrated in the double floor without extra parts, electronic calculators for sub assemblies such as the engine, the transmission, hitches, automatic functions like GPS steering. It can also include sensors such as a gyroscope for GPS steering, and/or an electronic board or a fuse box. It can also leave a free space to store a tool box which is usually unprotected from thieves when stored on the outside of the tractor.

In another embodiment not illustrated on the drawings, the storage space 100 defined by the upper floor portion 23 and lower floor portion 24 can also be separated into a plurality of chambers thanks to separating means. By separating the storage space 100 into different chambers, it is possible to insulate operating equipments from other. Thus, it is possible to reduce the noise as each element can be installed in a confined environment. In a configuration in which the upper floor portion 23 includes a trap door over every chamber, it is possible to access a given element while keeping the other safely inside their chamber.

The separating means can be disposed between both the upper floor portion 23 and the lower floor portion 24 in order to be fixed to both of them. By having the separating means fixed to both upper and lower floor portion, the support of the upper floor portion is increased.

The vehicle thus disclosed having this specific cabin floor arrangement is particularly suitable for an increased comfort of the operator in view of the reduction of noise of equipments installed within the double floor, and for a better accessibility of the equipments for any maintenance operation.

## Claims

1. Agricultural vehicle such as a tractor (1) having a main chassis (3) onto which is fixed a cabin structure (9) having a floor arrangement (10) for supporting at least a seat (13), **characterized in that** at least a part of said floor arrangement (10) comprises a double-walled structure defining a storage space (100) adapted to receive operating equipments of the vehicle, the double-walled structure being composed of a lower floor portion (24) and an upper floor portion (23), the upper floor portion (23) comprising a first portion (231) located at the front of the cabin structure (9) and a second portion (232) located at the back of the cabin structure (9), the second portion (232) being at a higher altitude level than the first portion (231), the first and second portions defining a step (25), the seat (13) being mounted on the second portion (232) of the upper floor part (23), and the double wall structure comprising a storage space under the first portion (231) and a storage space under the second portion (232) of the upper floor portion (23), the upper floor portion (23) comprising at least one trap door for accessing the operating equipments.

2. Agricultural vehicle as claimed in claim 1, wherein the lower floor portion (24) is secured to the main chassis (3) by suspension means.

3. Agricultural vehicle as claimed in claim 1 or 2, wherein the upper floor portion (23) comprises at least one trap door for accessing the operating equipments.

4. Agricultural vehicle as claimed in claim 1 to 3, wherein the at least one separating means is coupled to both the upper floor portion (23) and the lower floor portion (24) in order to help support the upper floor portion (23).

5. Agricultural vehicle as claimed in claims 1 to 4, wherein the operating equipments are electrical equipments and/or hydraulic equipments.

6. Agricultural vehicle as claimed in claims 1 to 5, wherein one of the operating equipments is a main module of an air conditioner system (27) for the cabin (9).

## Patentansprüche

1. Landwirtschaftliches Fahrzeug wie ein Traktor (1) mit einem Hauptfahrgestell (3), auf dem eine Kabinenstruktur (9) mit einer Bodenanordnung (10) zum Stützen mindestens eines Sitzes (13) befestigt ist, **dadurch gekennzeichnet, dass** mindestens ein Teil der Bodenanordnung (10) eine doppelwandige Struktur umfasst, die einen Stauraum (100) definiert, der zur Aufnahme von Betriebsausrüstungen des Fahrzeugs geeignet ist, wobei die doppelwandige Struktur aus einem unteren Bodenabschnitt (24) und einem oberen Bodenabschnitt (23) besteht, wobei der obere Bodenabschnitt (23) einen ersten Abschnitt (231), der an der Vorderseite der Kabinenstruktur (9) angeordnet ist, und einen zweiten Abschnitt (232), der an der Rückseite der Kabinenstruktur (9) angeordnet ist, umfasst, wobei der zweite Abschnitt (232) auf einer höhere Ebene als der erste Abschnitt (231) ist, wobei der erste und der zweite Abschnitt eine Stufe (25) definieren, wobei der Sitz (13) auf dem zweiten Abschnitt (232) des oberen Bodenteils (23) montiert ist und die doppelwandige Struktur einen Stauraum unter dem ersten Abschnitt (231) und einen Stauraum unter dem zweiten Abschnitt (232) des oberen Bodenabschnitts (23) umfasst, wobei der obere Bodenabschnitt (23) mindestens eine Falltür zum Zugang zu der Betriebsausrüstung umfasst.

2. Landwirtschaftliches Fahrzeug nach Anspruch 1, wobei der untere Bodenabschnitt (24) über Aufhängungsmittel an dem Hauptfahrgestell (3) befestigt ist.

3. Landwirtschaftliches Fahrzeug nach Anspruch 1 oder 2, wobei der obere Bodenabschnitt (23) mindestens eine Falltür zum Zugang zu der Betriebsausrüstung umfasst.

4. Landwirtschaftliches Fahrzeug nach Ansprüchen 1 bis 3, wobei das mindestens eine Trennmittel sowohl an den oberen Bodenabschnitt (23) als auch an den unteren Bodenabschnitt (24) gekoppelt ist, um zum Stützen des oberen Bodenabschnitts (23) beizutragen.

5. Landwirtschaftliches Fahrzeug nach Ansprüchen 1 bis 4, wobei die Betriebsausrüstung eine elektrische Ausrüstung und/oder eine hydraulische Ausrüstung ist.

6. Landwirtschaftliches Fahrzeug nach Ansprüchen 1 bis 5, wobei eine der Betriebsausrüstungen ein Hauptmodul einer Klimaanlage (27) für die Kabine (9) ist.

## Revendications

1. Véhicule agricole tel qu'un tracteur (1) comportant un châssis principal (3) sur lequel est fixée une structure de cabine (9) comportant un système de plancher (10) destiné à supporter au moins un siège (13), **caractérisé en ce qu'**au moins une partie dudit système de plancher (10) comprend une structure à double paroi définissant un espace de stockage (100) conçu pour recevoir des équipements fonctionnels du véhicule, la structure à double paroi étant composée d'une partie de plancher inférieure (24) et d'une partie de plancher supérieure (23), la partie de plancher supérieure (23) comprenant une première partie (231) située à l'avant de la structure de cabine (9) et une seconde partie (232) située à l'arrière de la structure de cabine (9), la seconde partie (232) se trouvant à un niveau d'altitude plus élevé que celui de la première partie (231), les première et seconde parties définissant un gradin (25), le siège (13) étant monté sur la seconde partie (232) de la partie de plancher supérieure (23) et la structure à double paroi comprenant un espace de stockage sous la première partie (231) et un espace de stockage sous la seconde partie (232) de la partie de plancher supérieure (23), la partie de plancher supérieure (23) comprenant au moins une trappe permettant d'accéder aux équipements fonctionnels.

2. Véhicule agricole selon la revendication 1, dans lequel la partie de plancher inférieure (24) est assujettie au châssis principal (3) par des moyens de suspension.

3. Véhicule agricole selon la revendication 1 ou 2, dans lequel la partie de plancher supérieure (23) comprend au moins une trappe permettant d'accéder aux équipements fonctionnels.

4. Véhicule agricole selon les revendications 1 à 3, dans lequel le ou les moyens de séparation sont accouplés à la fois à la partie de plancher supérieure (23) et à la partie de plancher inférieure (24) de façon à contribuer au support de la partie de plancher supérieure (23).

5. Véhicule agricole selon les revendications 1 à 4, dans lequel les équipements fonctionnels sont des équipements électriques et/ou des équipements hydrauliques.

6. Véhicule agricole selon les revendications 1 à 5, dans lequel l'un des équipements fonctionnels est un module principal d'un système de climatisation (27) pour la cabine (9).
